# EUROPEAN PATENT APPLICATION

(11) **EP 4 679 564 A1**
(43) Date of publication of application: **14.01.2026**
(21) Application number: 25183597.1
(22) Date of filing: 18.06.2025
(51) Int. Cl.: H01M 10/54

(54) **SEPARATION METHOD FOR ELECTRODE BODY**

(30) Priority: 21.06.2024 JP 2024100786
(71) Applicant: Prime Planet Energy & Solutions, Inc., Chuo-ku, Tokyo 103-0022 (JP)
(72) Inventor: UCHIDA, Yozo, Tokyo, 103-0022 (JP); KITAYAMA, Taku, Fukushima-ken, 963-0725 (JP)
(74) Representative: Kuhnen & Wacker Patent- und Rechtsanwaltsbüro PartG mbB

(57) **Abstract**

A process of separating an electrode body 20 includes an immersing step S2 and an ultrasonic wave applying step S3. In the immersing step S2, the stacked electrode body 20 is immersed in a solution SL containing hydrofluoric acid. Thereafter, in the ultrasonic wave applying step S3, an ultrasonic wave is applied to the solution SL. In the ultrasonic wave applying step S3, the ultrasonic wave is applied in a state where a positive electrode tab 23 and a negative electrode tab 25 of the stacked electrode body 20 are gripped.

## Description

### BACKGROUND

The present disclosure relates to a separation method for an electrode body.

Japanese Laid-open Patent Publication No. 2021-073375 discloses a method for recycling a lithium-ion secondary battery to recover a usable material, such as nickel or the like, from a used lithium-ion secondary battery.

In the method disclosed in Japanese Laid-open Patent Publication No. 2021-073375, a discharged lithium-ion secondary battery is shredded into small pieces and the small pieces are immersed in a polar solvent to form a different-component mixture. It is described therein that a usable electrode material can be recovered by stirring, sieving, and separating the different-component mixture.

Incidentally, the present inventors desires to increase a recovery rate of an electrode material.

### SUMMARY

A separation method for an electrode body disclosed herein includes a preparing step of preparing an electrode body, an immersing step of immersing the electrode body in a solution containing hydrofluoric acid, and an ultrasonic wave applying step of applying an ultrasonic wave to the solution. The electrode body that is prepared in the preparing step includes a positive electrode sheet including a positive electrode active material layer provided on a positive electrode collecting foil, and a negative electrode sheet including a negative electrode active material layer provided on a negative electrode current collecting foil. The positive electrode sheet and the negative electrode sheet are superimposed on each other so as to be opposed to each other in a state where the positive electrode active material layer and the negative electrode active material layer are insulated from each other, the positive electrode sheet includes a positive electrode tab that is a portion of the positive electrode collecting foil that protrudes from an area in which the positive electrode active material layer and the negative electrode active material layer are superimposed on each other, the negative electrode sheet includes a negative electrode tab that is a portion of the negative electrode collecting foil that protrudes from the area in which the negative electrode active material layer and the negative electrode active material layer are superimposed on each other, and in the ultrasonic wave applying step, the ultrasonic wave is applied to the solution containing the hydrofluoric acid in a state where each of the positive electrode tab and the negative electrode tab of the electrode body is gripped.

According to the separation method for an electrode body, a recovery rate of an electrode material can be increased.

### BRIEF DESCRIPTION OF THE DRAWINGS

FIG. 1 is a perspective view of an electricity storage device 100 according to one preferred embodiment.
FIG. 2 is a schematic longitudinal sectional view taken along the line A-A of FIG. 1.
FIG. 3 is a longitudinal sectional view of a stacked electrode body 20.
FIG. 4 is a schematic view illustrating a positive electrode sheet 22 and a negative electrode sheet 24.
FIG. 5 is a schematic view illustrating an electrode body separation device 200 according to the preferred embodiment.
FIG. 6 is a cross-sectional view taken along the allow B in FIG. 5.
FIG. 7 is a flowchart illustrating a separation method for the stacked electrode body 20.

### DETAILED DESCRIPTION OF THE PREFERRED EMBODIMENTS

Preferred embodiments of a technology disclosed herein will be described below with reference to the accompanying drawings, as appropriate. Matters other than matters specifically mentioned in this specification and necessary for carrying out the technology disclosed herein (for example, general configuration and manufacturing process of an electricity storage device that do not characterize the present disclosure) can be understood as design matters for those skilled in the art based on the related art in the related field. The technology disclosed herein can be carried out based on contents disclosed in this specification and the common general technical knowledge in the field. In the accompanied drawings, members and portions that have the same function are denoted by the same reference symbol and redundant description will be omitted or simplified, as appropriate. In this specification, the notation "A to B" that indicates a range means "A or more and B or less" and also encompasses "a range that exceeds A" and "a range that is less than B."

### <Electricity Storage Device 100>

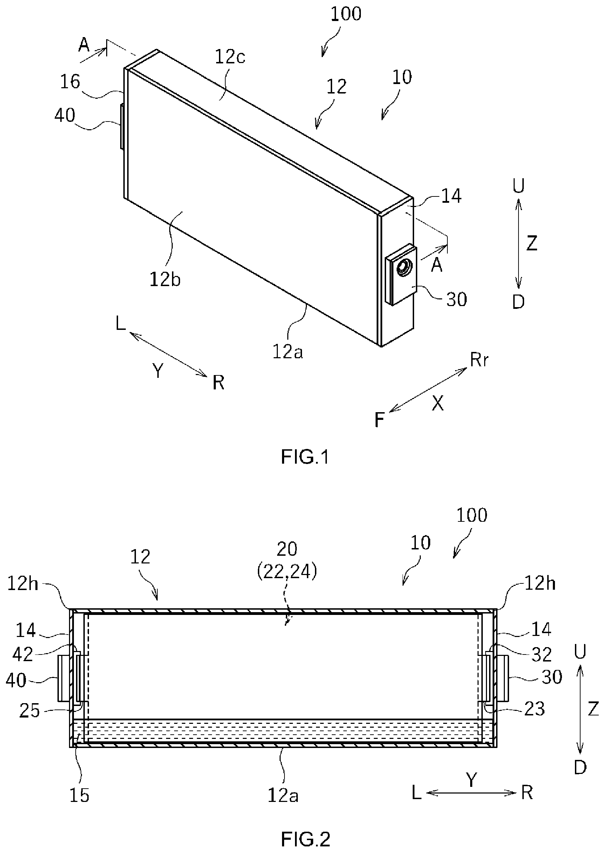

FIG. 1 is a perspective view of an electricity storage device 100 according to one preferred embodiment. FIG. 2 is a schematic longitudinal sectional view taken along the line A-A of FIG. 1, and illustrates an internal configuration of the electricity storage device 100. As illustrated in FIG. 1, the electricity storage device 100 has a rectangular shape (specifically, a rectangular parallelopiped shape) formed of a hexahedron. The electricity storage device 100 is installed as illustrated in FIG. 1 when actually being used. Note that, in the following description, reference signs "F," "Rr," "L," "R," "U," and "D" in the drawings respectively denote "front," "rear," "left," "right," "up," and "down," and reference signs "X," Y," and "Z" in the drawings respectively denote a thickness direction of the electricity storage device 100, a width direction that is orthogonal to the thickness direction, and an up-down direction that is orthogonal to the thickness direction and the the width direction.

As illustrated in FIG. 2, the electricity storage device 100 includes a case 10, a stacked electrode body 20, a positive electrode terminal 30, a negative electrode terminal 40, and an electrolytic solution 15. The electricity storage device 100 is herein a nonaqueous electrolytic solution secondary battery and, for example, is a lithium-ion secondary battery. The electricity storage device 100 is configured such that the stacked electrode body 20 and the electrolytic solution 15 are housed in the case 10 to which the positive electrode terminal 30 and the negative electrode terminal 40 are attached. Note that, in this specification, the term "electricity storage device" refers to general devices that are capable of being charged and discharged repeatedly, and corresponds to a concept encompassing secondary batteries, such as lithium-ion secondary batteries and nickel-hydrogen batteries, and capacitors, such as lithium-ion capacitors, electrical double-layer capacitors, or the like.

The case 10 is a case that houses the stacked electrode body 20 and the electrolytic solution 15. As illustrated in FIG. 1, the case 10 has a flat and bottomed rectangular parallelopiped (rectangle) outer shape herein. A conventionally used material may be used for the case 10, and there is no particular limitation thereon. The case 10 is preferably formed of a metal, and is preferably formed of, for example, aluminum, aluminum alloy, iron, iron alloy, or the like. As illustrated in FIG. 2, the case 10 herein includes a rectangular cylindrical case body 12 having a pair of openings 12h and two sealing plates 14 that seal the pair of openings 12h. Each of the sealing plates 14 is joined (for example, is weld-jointed) to a peripheral edge of a corresponding one of the pair of openings 12h of the case body 12, and thus, the case 10 is integrated. The case 10 is air-tightly sealed (hermetically sealed).

As illustrated in FIG. 1, the case body 12 includes a bottom surface 12a, a pair of long side surfaces 12b, and a top surface 12c opposed to the bottom surface 12a. Each of the bottom surface 12a and the top surface 12c has an approximately rectangular shape having a pair of short sides and a pair of long sides. Each of the pair of long side surfaces 12b extends from a corresponding one of the pair of long sides of the bottom surface 12a, and the long side surfaces 12b are opposed to each other. Each of the long side surfaces 12b has a larger area than that of each of the bottom surface 12a and the top surface 12c herein. Each of the long side surfaces 12b has a larger area than each of the sealing plates 14 herein. The top surface 12c extends from each of the long sides of the pair of long side surfaces 12b to connects upper end portions of the pair of long side surfaces 12b together. The case body 12 is formed, for example, by bending a single metal plate into a rectangular cylindrical shape and joining (for example, weld-joining) seams.

Note that, as used in this specification, the term "approximately rectangular" encompasses, in addition to a complete rectangular shape (a rectangle), for example, a shape in which corners that connect long sides and short sides of rectangular surfaces are rounded, a shape in which corner portions have notches, or the like.

As illustrated in FIG. 2, the pair of sealing plates 14 are plate members each of which seals a corresponding one of the pair of openings 12h. Each of the sealing plate 14 has an approximately rectangular shape. Each of the sealing plates 14 has a smaller area than that of each of the bottom surface 12a and the top surface 12c herein. The pair of sealing plates 14 are opposed to each other. Each of the positive electrode terminal 30 and the negative electrode terminal 40 is provided on a corresponding one of the pair of sealing plates 14.

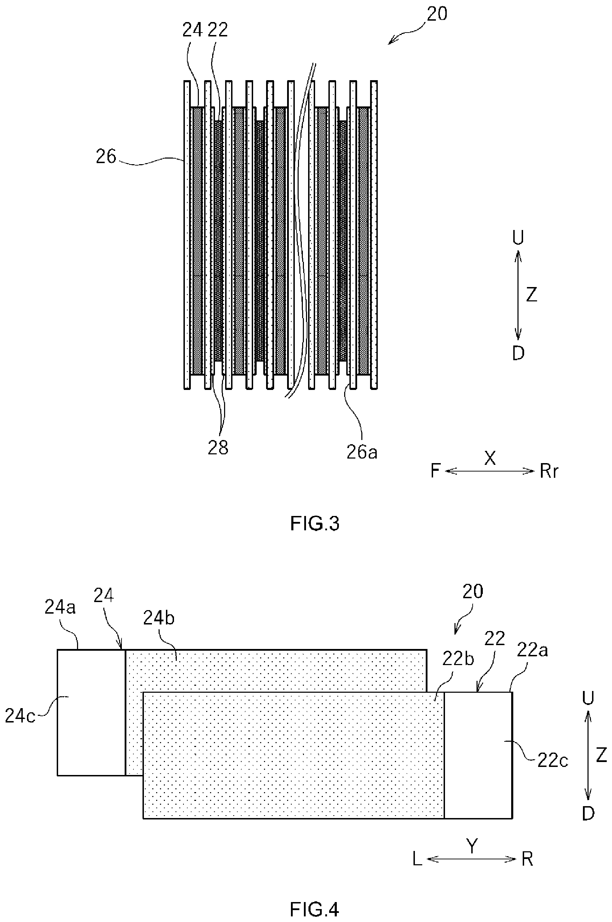

The positive electrode terminal 30 is attached to one of the pair of sealing plates 14 that is positioned at right in a width direction Y. The positive electrode terminal 30 is preferably formed of metal and is more preferably formed of, for example, aluminum or an aluminum alloy. The positive electrode terminal 30 is electrically coupled to the positive electrode sheet 22 (see FIG. 3 as well) of the stacked electrode body 20 via a positive electrode current collecting portion 32 in the case 10.

The negative electrode terminal 40 is attached to one of the pair of sealing plates 14 that is positioned at left in the width direction Y. The negative electrode terminal 40 is preferably formed of metal and is more preferably formed of, for example, copper or a copper alloy. The negative electrode terminal 40 is electrically coupled to the negative electrode sheet 24 (see FIG. 3, as well) of the stacked electrode body 20 via a negative electrode current collecting portion 42 in the case 10.

Note that, in this preferred embodiment, each of the positive electrode terminal 30 and the negative electrode terminal 40 is provided in a corresponding one of the pair of sealing plates 14 (surfaces of the case 10 that are opposed to each other), but the positive electrode terminal 30 and the negative electrode terminal 40 are not limited thereto. The positive electrode terminal 30 and the negative electrode terminal 40 may be provided on the same sealing plate 14, and may be provided on the case body 12.

The electrolytic solution 15 is housed in the case 10 with the stacked electrode body 20. A portion of the electrolytic solution 15 is permeated in the stacked electrode body 20. The electrolytic solution 15 is a nonaqueous electrolytic solution including a nonaqueous solvent (an organic solvent) and a supporting salt (an electrolyte salt, for example, a lithium salt and a sodium salt). Examples of the nonaqueous solvent include, for example, carbonates, such as ethylene carbonate, dimethyl carbonate, ethyl methyl carbonate, or the like. Examples of the supporting salt include fluorine-containing lithium salt, such as lithium hexafluorophosphate (LiPF₆) or the like. The electrolytic solution 15 is typically in a liquid state, but may be in a gel state. In this preferred embodiment, the electrolytic solution 15 includes lithium hexafluorophosphate (LiPF₆). Although not particularly limited, there is preferably an excessive electrolytic solution 15 between the case 10 and the stacked electrode body 20.

### <Stacked Electrode Body 20>

The stacked electrode body 20 is housed in the case 10. Note that one stacked electrode body 20 or two or more (multiple) stacked electrode bodies 20 may be arranged in one case 10. The stacked electrode body 20 may be housed in the case 10 in a state of being covered with an insulating sheet (an electrode body holder) formed of resin.

FIG. 3 is a longitudinal sectional view of the stacked electrode body 20. As illustrated in FIG. 3, the stacked electrode body 20 herein includes multiple positive electrode sheets 22, multiple negative electrode sheets 24, multiple separators 26, and adhesive layers 28, the adhesive layers 28 being provided such that one adhesive layers 28 is located between each of the positive electrode sheets 22 and a corresponding one of the separators 26 and between each of the negative electrode sheets 24 and a corresponding one of the separators 26, in a stacking direction X. However, the adhesive layers 28 may be provided such that one adhesive layer 28 is provided between one of the positive electrode sheets 22 or the negative electrode sheets 24 and a corresponding one of the separators 26. The stacked electrode body 20 is configured such that the multiple positive electrode sheets 22 and the multiple negative electrode sheets 24 are superimposed with each of the separators 26 sandwiched between a corresponding one of the positive electrode sheet 22 and a corresponding one of the negative electrode sheet 24. The multiple positive electrode sheets 22, the multiple negative electrode sheets 24, and the multiple separators 26 are stacked in a direction that intersects with an up-down direction Z. A stacking direction of the multiple positive electrode sheet 22, the multiple negative electrode sheet 24, and the multiple separators 26 is a thickness direction X herein. In the following description, the thickness direction X will be also referred to as the stacking direction X. FIG. 4 is a schematic view illustrating the positive electrode sheet 22 and the negative electrode sheet 24. Note that, in FIG. 4, illustration of the separator 26 is omitted. As illustrated in FIG. 4, a positive electrode active material layer 22b is formed on the positive electrode sheet 22, and a negative electrode active material layer 24b is formed on the negative electrode sheet 24. Accordingly, the stacked electrode body 20 is configured such that the positive electrode sheet 22 and the negative electrode sheet 24 are superimposed on each other so as to be opposed to each other in a state where the positive electrode active material layer 22b and the negative electrode active material layer 24b are insulated from each other. The positive electrode active material layer 22b and the negative electrode active material layer 24b are insulated from each other by the separator 26 (see FIG. 3). Note that the stacked electrode body 20 may be configured such that one separator is folded into a zigzag shape and each of the multiple positive electrode sheets 22 and the multiple negative electrode sheets 24 is interposed between corresponding folded portions of the separator.

The positive electrode sheet 22 typically includes a positive electrode collecting foil 22a and the positive electrode active material layer 22b fixed to at least one surface (herein, both surfaces) of the positive electrode collecting foil 22a. The positive electrode collecting foil 22a is preferably a metal foil. In this preferred embodiment, the positive electrode collecting foil 22a is formed of, for example, aluminum, an aluminum alloy, or the like. The positive electrode active material layer 22b includes a positive electrode active material that is capable of reversibly storing and releasing charge carriers. As the positive electrode active material, a conventionally used positive electrode active material may be used, and there is no particular limitation. Examples of the positive electrode active material include a lithium-transition metal complex oxide including nickel, cobalt, and manganese. The positive electrode active material layer 22b may include an optional component other than the positive electrode active material, for example, a binder, a conductive material, or the like. As illustrated in FIG. 3, each of both surfaces of the positive electrode sheet 22 in the stacking direction X is adhered to the corresponding separators 26 via the corresponding adhesive layers 28. As illustrated in FIG. 4, in this preferred embodiment, the positive electrode sheet 22 has an approximately rectangular shape when viewed from the thickness direction X. A non-coated portion 22c that does not include the positive electrode active material layer 22b is formed at one end portion of the positive electrode collecting foil 22a in the width direction Y (herein, at right in the width direction Y).

The negative electrode sheet 24 typically includes a negative electrode current collecting foil 24a and the negative electrode active material layer 24b fixed to at least one surface (herein, both surfaces) of the negative electrode current collecting foil 24a. The negative electrode current collecting foil 24a is preferably a metal foil. In this preferred embodiment, the negative electrode current collecting foil 24a is formed of, for example, copper, a copper alloy, or the like. The negative electrode active material layer 24b includes a negative electrode active material that is capable of reversibly storing and releasing charge carriers. As the negative electrode active material, a conventionally used negative electrode active material may be used, and there is no particular limitation. Examples of the negative electrode active material include a carbon material, such as graphite or the like, and a silicon-based material. The negative electrode active material layer 24b may include an optional component other than the negative electrode active material, for example, a binder, a thickener, a dispersant, or the like. As illustrated in FIG. 3, each of both surfaces of the negative electrode sheet 24 in the stacking direction X is adhered to the corresponding separators 26 via the corresponding adhesive layers 28. As illustrated in FIG. 4, in this preferred embodiment, the negative electrode sheet 24 has an approximately rectangular shape when viewed from the thickness direction X. A non-coated portion 24c that does not include the negative electrode active material layer 24b is formed at one end portion of the negative electrode current collecting foil 24a in the width direction Y (herein, at left in the width direction Y).

The separator 26 illustrated in FIG. 3 is an insulating sheet in which multiple fine through holes through which charge carriers can pass are formed. The separator 26 is provided between the positive electrode sheet 22 and the negative electrode sheet 24, so that contact of the positive electrode sheet 22 and the negative electrode sheet 24 to each other can be prevented and charge carriers (for example, lithium ion) can be moved between the positive electrode sheet 22 and the negative electrode sheet 24.

The separator 26 includes a separator base material formed of resin and one or more heat resistant layers (HRL) 26a including a metal oxide, such as alumina (Al₂O₃) or the like. In this preferred embodiment, the heat resistant layer 26a is formed at least one surface of the separator 26. The heat resistant layer 26a may be provided only on one surface of the separator 26 and may be provided on both surfaces thereof. Each of the separators 26 includes the heat resistant layer 26a on a surface at one side, specifically on a surface at a side opposed to the positive electrode sheet 22 herein.

The heat resistant layer 26a typically includes an inorganic filler and a heat resistant layer binder. Since the separator 26 includes the heat resistant layer 26a, the heat resistant layer 26a can suppress heat shrink of the separator 26 and contribute increase in safety of the electricity storage device 100 (see FIG. 1). As the inorganic filler, ceramic particles of alumina, zirconia, boehmite, aluminum hydroxide, silica, titania, or the like are preferable and, from a viewpoint of suppressing heat shrink of the separator 26, specifically, a compound including aluminum is preferable. Examples of the heat resistant layer binder include acrylic resin, fluorine resin, urethane resin, ethylene-vinyl acetate resin, epoxy resin, or the like.

As illustrated in FIG. 2, the positive electrode sheet 22 includes a positive electrode tab 23. The positive electrode tab 23 is a portion of the positive electrode collecting foil 22a that protrudes from an area in which the positive electrode active material layer 22b (see FIG. 4) and the negative electrode active material layer 24b (see FIG. 4) are superimposed on each other. The positive electrode tab 23 is formed by superimposing the non-coated portions 22c (see FIG. 4) on each other. The positive electrode tab 23 is electrically coupled to the positive electrode terminal 30 via the positive electrode current collecting portion 32. The negative electrode sheet 24 includes a negative electrode tab 25. The negative electrode tab 25 is a portion of the negative electrode current collecting foil 24a (see FIG. 4) that protrudes from the area in which the positive electrode active material layer 22b (see FIG. 4) and the negative electrode active material layer 24b (see FIG. 4) are superimposed on each other. The negative electrode tab 25 is formed by superimposing the non-coated portions 24c (see FIG. 4) on each other. The negative electrode tab 25 is electrically coupled to the negative electrode terminal 40 via the negative electrode current collecting portion 42.

The adhesive layer 28 illustrated in FIG. 3 is provided between at least one of the positive electrode sheet 22 and the negative electrode sheet 24 and the separator 26 and adheres the at least one of the positive electrode sheet 22 and the negative electrode sheet 24 and the separator 26. Thus, positional displacement of the positive electrode sheet 22 and the negative electrode sheet 24 can be suppressed. Moreover, stacking layer displacement of the stacked electrode body 20 can be suppressed. In FIG. 3, each of both surface of the positive electrode sheet 22 and both surfaces of the negative electrode sheet 24 is adhered to a corresponding one of the separators 26 that is opposed thereto via a corresponding one of the adhesive layers 28 in the stacking direction X.

The adhesive layer 28 is typically a layer including an adhesive layer binder at a highest mass ratio. Examples of the adhesive layer binder include resins, such as fluorine resin, acrylic resin, urethane resin, ethylene-vinyl acetate resin, epoxy resin, or the like. The adhesive layer binder may be, for example, a binder of a same type as the heat resistant layer binder described above, and may be a different binder from the heat resistant layer binder. The adhesive layer 28 may further includes some other material (for example, an inorganic filler or the like).

A configuration of the electricity storage device 100 including the stacked electrode body 20 has been described above. Incidentally, in a process of recycling a used secondary battery, it is strongly desired to recover a metal (so-called rare metal), such as nickel, cobalt, manganese, or the like. In recycling the secondary battery, when the secondary battery is crushed, a metal that is a recovery target and a metal other than the recovery target metal are mixed, and a recovery rate of the recovery target metal is reduced to a relatively low level. Therefore, the present inventors considered that the recovery rate of the recovery target metal can be increased to a relatively high level when a positive electrode and a negative electrode of an electrode body can be separated from each other without crushing the positive electrode and the negative electrode.

Herein, in the secondary battery, multiple positive electrode sheets and multiple negative electrode sheets are superimposed on each other, and furthermore, are immersed in an electrolytic solution. Each of the positive electrode sheets and the negative electrode sheets is formed to be relatively thin. Therefore, when it is attempted to separate the positive electrode sheet and the negative electrode sheet by pulling the electrode body or like operation, there is a possibility that the positive electrode sheet and the negative electrode sheet are damaged. The present inventors examined a possibility of separating each of the positive electrode sheet and the negative electrode sheet without damaging the positive electrode sheet and the negative electrode sheet in a step of recycling the secondary battery.

### <Electrode Body Separation Device 200>

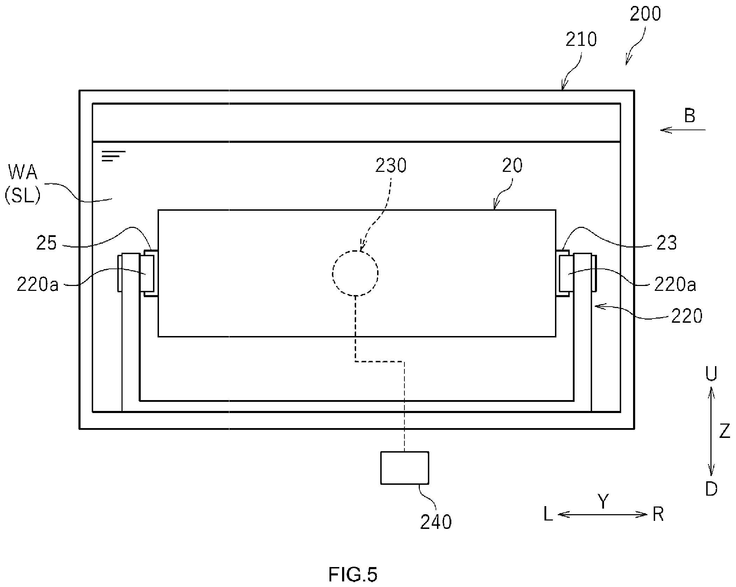

FIG. 5 is a schematic view illustrating an electrode body separation device 200 according to this preferred embodiment. As illustrated in FIG. 5, the electrode body separation device 200 includes a water tank 210, a gripping tool 220, an ultrasonic vibrator 230, and a high frequency electric power source 240.

The water tank 210 is a water tank in which an opening (not illustrated) is formed in a portion of an upper surface thereof and that has an approximately rectangular parallelepiped shape. Water WA is filled in the water tank 210. There is no particular limitation on a shape of the water tank 210. A position of an upper end of the water WA has reached a vicinity of an upper end of the water tank 210. Although there is no particular limitation on a material that forms the water tank 210, the water tank 210 is formed of, for example, glass, acrylic, or the like. Although not illustrated, the water tank 210 may include a supply passage through which a liquid (the water WA and a solution SL that will be described later) in the water tank 210 is supplied, a drain passage through which the liquid in the water tank 210 is drained, or the like.

The gripping tool 220 is installed in the water tank 210 and grips the stacked electrode body 20. The gripping tool 220 is arranged in the water WA. The gripping tool 220 has an approximately U-shape. The gripping tool 220 includes a clip portion 220a. As illustrated in FIG. 5, in the gripping tool 220, a pair of clip portions 220a are provided along the width direction Y of the stacked electrode body 20. Although not illustrated, the clip portion 220a can pinch an object by a biasing force of a spring or the like. Each of a pair of clip portions 220a grips a corresponding one of the positive electrode tab 23 and the negative electrode tab 25 of the stacked electrode body 20. When the gripping tool 220 grips the positive electrode tab 23 and the negative electrode tab 25, the stacked electrode body 20 is arranged in the water WA. As illustrated in FIG. 5, in this preferred embodiment, the up-down direction Z of the stacked electrode body 20 in the water WA matches an up-down direction in a drawing view of FIG. 5. However, there is no particular limitation on a direction in which the stacked electrode body 20 is arranged. For example, the stacked electrode body 20 may be arranged such that the stacking direction X (see FIG. 3) matches the up-down direction in the drawing view of FIG. 5.

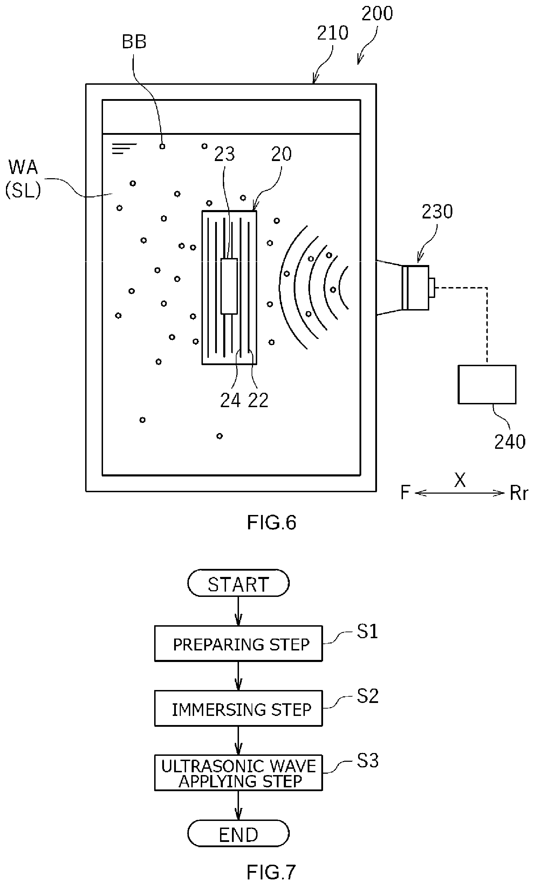

The ultrasonic vibrator 230 is a vibrator that generates an ultrasonic wave that vibrates the water WA. Although there is no particular limitation on a configuration of the ultrasonic vibrator 230, for example, the ultrasonic vibrator 230 can be realized by a bolt-clamping Langevin type ultrasonic vibrator in which lead zirconate titanate (PZT) is sandwiched between metal blocks and the PZT and the blocks are clamped with a bolt, or the like. PZT is a metal that vibrates when receiving an AC voltage. FIG. 6 is a cross-sectional view taken along an allow B in FIG. 5. Note that, in FIG. 6, illustration of the gripping tool 220 is omitted. In FIG. 6, a left-right direction in a drawing view is the stacking direction X of the stacked electrode body 20. As illustrated in FIG. 6, in this preferred embodiment, the ultrasonic vibrator 230 is arranged in a position that is opposed to the positive electrode sheet 22 and the negative electrode sheet 24 in the stacking direction X of the stacked electrode body 20 of the water tank 210. Accordingly, the ultrasonic vibrator 230 is arranged such that an ultrasonic wave generated by the ultrasonic vibrator 230 moves in the stacking direction X. However, there is no particular limitation on a configuration and a position of the ultrasonic vibrator 230. The ultrasonic vibrator 230 may be, for example, a so-called throwing type ultrasonic vibrator that is arranged in the water WA.

The high frequency electric power source 240 is coupled to the ultrasonic vibrator 230. The high frequency electric power source 240 includes an oscillator (not illustrated) and a power amplifier (not illustrated) therein. The oscillator generates an AC signal of a predetermined frequency. The high frequency electric power source 240 may include a switch, a display screen, or the like used for setting the frequency. A power amplifier of the high frequency electric power source 240 amplifies the AC signal generated by the oscillator to generate an ultrasonic signal. The generated ultrasonic signal is transmitted to the ultrasonic vibrator 230. Thus, the ultrasonic vibrator 230 vibrates at a predetermined frequency. However, there is no particular limitation on the frequency at which the ultrasonic vibrator 230 is caused to vibrate by the signal of the high frequency electric power source 240. The frequency may be constant, and may be increased and reduced (swept) with time.

The electrode body separation device 200 has been described above. Next, a separation method for the stacked electrode body 20 will be described. FIG. 7 is a flowchart illustrating a separation method for the stacked electrode body 20. The separation method for the stacked electrode body 20 disclosed herein includes a preparing step S1, an immersing step S2, and an ultrasonic wave applying step S3.

The preparing step S1 is a step of preparing an electrode body. In this preferred embodiment, in the preparing step S1, the stacked electrode body 20 is prepared. In the preparing step S1, first, the used electricity storage device 100 (see FIG. 2) is prepared. Next, a hole is formed in the case 10 of the electricity storage device 100 illustrated in FIG. 2 and the electrolytic solution 15 is drained. For example, as for the hole, multiple holes are formed. Air is blown in through some of the formed multiple holes and the air is sucked through the other holes, so that the electrolytic solution 15 in the case 10 can be sucked. Note that, in this preferred embodiment, the electrolytic solution 15 in the case 10 is sucked to an extent that the electrolytic solution 15 permeated in the stacked electrode body 20 is not completely sucked. That is, a portion of the electrolytic solution 15 is not sucked out of the case 10 and remains permeated in the stacked electrode body 20. Therefore, the stacked electrode body 20 that is prepared in this preferred embodiment is impregnated with the electrolytic solution 15 containing lithium hexafluorophosphate (LiPF₆).

After the electrolytic solution 15 in the case 10 is sucked, a connection portion between the case 10 and a corresponding one of the sealing plates 14 is cut, and thus, the sealing plates 14 are separated from the case 10. In forming the holes in the case 10 and in cutting the connection portions between the case 10 and the sealing plates 14, for example, a tool (for example, an electric saw or the like) including a cutting blade, an electric cutting tool (for example, a grinder, a Leutor or the like), a water cutter, a laser cutter, or the like is used. After the sealing plates 14 are separated, the stacked electrode body 20 is removed from the case 10. Removing of the stacked electrode body 20 is executed by a conventionally known method, for example, by pushing using a pushing rod, or the like. In the removed stacked electrode body 20, the positive electrode sheets 22, the negative electrode sheets 24, and the separators 26 that are all wet with the electrolytic solution 15 stick to each other by surface tension.

The immersing step S2 is a step of immersing the electrode body in a solution containing hydrofluoric acid. In this preferred embodiment, in the immersing step S2, the stacked electrode body 20 is immersed in the solution containing hydrofluoric acid by immersing the stacked electrode body 20 in the water WA and generating hydrofluoric acid therein. The stacked electrode body 20 removed in the preparing step S1 is installed in the water tank 210 illustrated in FIG. 5. At this time, the stacked electrode body 20 is installed such that each of the positive electrode tab 23 and the negative electrode tab 25 of the stacked electrode body 20 is gripped by a corresponding one of the clip portions 220a of the gripping tool 220. Thus, the stacked electrode body 20 is immersed in the water WA. At this time, an entire portion of the stacked electrode body 20 is preferably arranged in the water WA.

Herein, as descried above, the water WA is filled in the water tank 210. The stacked electrode body 20 is impregnated with the electrolytic solution 15 containing lithium hexafluorophosphate (LiPF₆). Accordingly, when the stacked electrode body 20 is arranged in the water WA, hydrogen fluoride (HF) is generated in accordance with Expressions 1, 2, and 3 below.

[Expression 1] LiPF₆ ⇔ LiF + PF₅

[Expression 2] PF₅ + H₂O →POF₃ + 2HF

[Expression 3] POF₃ + H₂O →POF₂(OH) + HF

Hydrogen fluoride (HF) generated in accordance with Expressions 1 to 3 above dissolves in the water WA of the water tank 210. Accordingly, the solution SL containing hydrofluoric acid is filled in the water tank 210. Therefore, in the immersing step S2 in this preferred embodiment, the stacked electrode body 20 impregnated with the electrolytic solution 15 containing lithium hexafluorophosphate (LiPF₆) is immersed in the water WA to cause reactions of Expressions 1 to 3, and thus, the stacked electrode body 20 is immersed in the solution SL containing hydrofluoric acid. However, the immersing step S2 may be a step of immersing the stacked electrode body 20 in the solution SL in a state where the solution SL containing hydrofluoric acid has been prepared in advance. Note that, in this preferred embodiment, a concentration of hydrofluoric acid is preferably 1.5 wt% to 5 wt%. For example, based on an amount of the electrolytic solution 15 that is permeated in the stacked electrode body 20, an amount of the water WA in the water tank 210, and Expressions 1 to 3, the amount of the water WA may be adjusted such that the concentration of hydrofluoric acid is 1.5 wt% to 5 wt%.

When the stacked electrode body 20 is immersed in the solution SL containing hydrofluoric acid, an oxide film formed on a surface of the positive electrode collecting foil 22a (see FIG. 4) of the positive electrode sheet 22 reacts with hydrofluoric acid and dissolves. Similarly, an oxide film formed on a surface of the negative electrode current collecting foil 24a (see FIG. 4) of the negative electrode sheet 24 also dissolves. The heat resistant layer 26a of the separator 26 also dissolves due to hydrofluoric acid.

The ultrasonic wave applying step S3 is a step of applying an ultrasonic wave to the solution SL. In the ultrasonic wave applying step S3, an ultrasonic wave is applied to the solution SL containing hydrofluoric acid in a state where each of the positive electrode tab 23 and the negative electrode tab 25 of the stacked electrode body 20 is gripped. In this preferred embodiment, as illustrated in FIG. 5, each of the positive electrode tab 23 and the negative electrode tab 25 is gripped by a corresponding one of the clip portions 220a of the gripping tool 220. In this state, as illustrated in FIG. 6, the high frequency electric power source 240 is driven, an ultrasonic signal is transmitted to the ultrasonic vibrator 230, and thus, an ultrasonic wave is applied to the solution SL. In this preferred embodiment, the ultrasonic vibrator 230 irradiates an ultrasonic wave of 200 kHz continuously for ten minutes. However, there is no particular limitation on a frequency and an irradiation time of the ultrasonic wave.

Note that, in the ultrasonic wave applying step S3, the ultrasonic wave is applied to the stacked electrode body 20 in a direction in which the positive electrode sheet 22 and the negative electrode sheet 24 are superimposed on each other (the stacking direction X). In this preferred embodiment, the ultrasonic vibrator 230 is arranged in a position that is opposed to the positive electrode sheet 22 and the negative electrode sheet 24 in the stacking direction X. Therefore, the ultrasonic wave generated by the ultrasonic vibrator 230 moves in the stacking direction X of the positive electrode sheet 22 and the negative electrode sheet 24. In other words, the ultrasonic wave moves toward the surface of the positive electrode collecting foil 22a on which the positive electrode active material layer 22b is formed and the surface of the negative electrode current collecting foil 24a on which the negative electrode active material layer 24b is formed. At this time, a pressing force is generated in a propagation direction of the ultrasonic wave (herein, the stacking direction X) by a radiation pressure of the ultrasonic wave that propagates in the solution SL. Thus, the solution SL and the stacked electrode body 20 are pressed in the stacking direction X. Since the solution SL is pressed in the stacking direction X, a flow is formed in the solution SL and the stacked electrode body 20 rocks due to the flow. Also, with the ultrasonic wave applied to the solution SL, cavitation is induced in the solution SL. Accordingly, in the solution SL, air bubbles BB are generated and extinguish. At this time, the air bubbles BB move mainly along the flow formed in the solution SL. Therefore, the air bubbles BB moves mainly in the stacking direction X near the ultrasonic vibrator 230 and, as moving away from the ultrasonic vibrator 230, gradually spreads throughout the solution SL.

Due to rocking of the positive electrode sheet 22 and the negative electrode sheet 24 and an impact generated when the air bubbles BB extinguish, the positive electrode sheet 22, the negative electrode sheet 24, and the separator 26 gradually come off. Thereafter, the positive electrode active material layer 22b gradually comes off from the positive electrode collecting foil 22a. Similarly, the negative electrode active material layer 24b comes off from the negative electrode current collecting foil 24a. When the positive electrode active material layer 22b and the negative electrode active material layer 24b come off, the positive electrode active material and the negative electrode active material dissolve, are dispersed, or are precipitated in the solution SL. Each of the positive electrode tab 23 and the negative electrode tab 25 is gripped by the gripping tool 220, and therefore, the positive electrode collecting foil 22a and the negative electrode current collecting foil 24a are not dispersed in the solution SL and a state where the positive electrode collecting foil 22a and the negative electrode current collecting foil 24a are gripped by the gripping tool 220 is maintained.

After a flow illustrated in FIG. 7 ends, a worker can recover the positive electrode active material (the positive electrode active material layer 22b) and the negative electrode active material (the negative electrode active material layer 24b) from the solution SL and recover a desired electrode material, such as nickel or the like. A method for recovering the desired electrode material from the solution SL can be realized by a conventionally known method. The worker can recover the positive electrode collecting foil 22a and the negative electrode current collecting foil 24a gripped by the gripping tool 220. Thus, the stacked electrode body 20 is separated.

As described above, in the preferred embodiment described above, in the immersing step S2, the stacked electrode body 20 is immersed in the solution SL containing hydrofluoric acid. Thus, surface oxide films of the positive electrode collecting foil 22a and the negative electrode current collecting foil 24a dissolve. Thereafter, in the ultrasonic wave applying step S3, in a state where the positive electrode tab 23 and the negative electrode tab 25 are gripped, an ultrasonic wave is applied to the solution SL. At this time, the stacked electrode body 20 rocks in the stacking direction X in a state where both ends thereof in the width direction are gripped. When the stacked electrode body 20 rocks, the positive electrode active material layer 22b and the negative electrode active material layer 24b gradually come off from the positive electrode collecting foil 22a and the negative electrode current collecting foil 24a. Note that, since the positive electrode tab 23 and the negative electrode tab 25 are gripped, the positive electrode collecting foil 22a and the negative electrode current collecting foil 24a are prevented from being dispersed in the solution SL. Thus, the positive electrode collecting foil 22a and the negative electrode current collecting foil 24a can be separated from the positive electrode active material layer 22b and the negative electrode active material layer 24b, respectively. Desired electrode materials can be obtained from the positive electrode active material layer 22b and the negative electrode active material layer 24b that have been separated. Accordingly, mixing of the positive electrode collecting foil 22a or the like with the positive electrode active material layer 22b and the negative electrode active material layer 24b can be suppressed and the stacked electrode body 20 can be separated. Therefore, a recovery rate of a desired electrode material cab be increased.

In the preferred embodiment described above, the electrolytic solution 15 housed in the case 10 contains lithium hexafluorophosphate (LiPF₆) and, in the immersing step S2, the stacked electrode body 20 is immersed in the water WA. Lithium hexafluorophosphate (LiPF₆) contained in the electrolytic solution 15 and the water WA react, so that hydrogen fluoride (HF) is generated. At this time, the solution SL containing hydrofluoric acid is filled in the water tank 210. Therefore, the stacked electrode body 20 can be immersed in the solution SL containing hydrofluoric acid by immersing the stacked electrode body 20 impregnated with the electrolytic solution 15 in the water WA. Thus, without preparing the solution SL containing hydrofluoric acid in the water tank 210 in advance, the stacked electrode body 20 can be immersed in the solution SL containing hydrofluoric acid. Therefore, in a step of separating the stacked electrode body 20, there is no need to prepare the solution SL containing hydrofluoric acid in advance. Accordingly, a burden of preparation is reduced in the step of separating the stacked electrode body 20.

In the preferred embodiment described above, the stacked electrode body 20 includes the separator 26 on which the heat resistant layer 26a is formed. The separator 26 is sandwiched between the positive electrode sheet 22 and the negative electrode sheet 24. When the stacked electrode body 20 is immersed by the immersing step S2, the heat resistant layer 26a of the separator 26 dissolves due to hydrofluoric acid contained in the solution SL. Thus, the positive electrode sheet 22 or the negative electrode sheet 24 can be separated from the separator 26 relatively easily. Therefore, also as for the stacked electrode body 20 including the separator 26 on which the heat resistant layer 26a is formed, the stacked electrode body 20 can be separated.

In the preferred embodiment described above, each of the positive electrode sheet 22 and the negative electrode sheet 24 has an approximately rectangular shape when viewed from the stacking direction X. In the ultrasonic wave applying step S3, an ultrasonic wave is applied to the stacked electrode body 20 in the stacking direction X. Therefore, at this time, the stacked electrode body 20 rocks in the stacking direction X. For example, as compared to when the stacked electrode body 20 rocks in the up-down direction Z or like case, moving of the stacked electrode body 20 can be increased. Moreover, a relatively large amount of the air bubbles BB generated by cavitation hits the surface of the positive electrode collecting foil 22a on which the positive electrode active material layer 22b is formed and the surface of the negative electrode current collecting foil 24a on which the negative electrode active material layer 24b is formed. Thus, the positive electrode active material layer 22b and the negative electrode active material layer 24b can easily come off because of an impact caused when the air bubbles BB extinguish. Therefore, the stacked electrode body 20 can be more efficiently separated.

As described above, the present specification includes disclosure set force in the following items.

First Item: A separation method for an electrode body, the separation method including a preparing step of preparing an electrode body, an immersing step of immersing the electrode body in a solution containing hydrofluoric acid, and an ultrasonic wave applying step of applying an ultrasonic wave to the solution, in which the electrode body that is prepared in the preparing step includes a positive electrode sheet including a positive electrode active material layer provided on a positive electrode collecting foil, and a negative electrode sheet including a negative electrode active material layer provided on a negative electrode current collecting foil, the positive electrode sheet and the negative electrode sheet are superimposed on each other so as to be opposed to each other in a state where the positive electrode active material layer and the negative electrode active material layer are insulated from each other, the positive electrode sheet includes a positive electrode tab that is a portion of the positive electrode collecting foil that protrudes from an area in which the positive electrode active material layer and the negative electrode active material layer are superimposed on each other, the negative electrode sheet includes a negative electrode tab that is a portion of the negative electrode collecting foil that protrudes from the area in which the negative electrode active material layer and the negative electrode active material layer are superimposed on each other, and in the ultrasonic wave applying step, the ultrasonic wave is applied to the solution containing the hydrofluoric acid in a state where each of the positive electrode tab and the negative electrode tab of the electrode body is gripped.

Second Item: The separation method for an electrode body according to the first item, in which the electrode body that is prepared in the preparing step is impregnated with an electrolytic solution containing LiPF₆, and in the immersing step, the electrode body is immersed in the solution containing the hydrofluoric acid by immersing the electrode body in water and generating the hydrofluoric acid.

Third Item: The separation method for an electrode body according to the first or second item, in which the electrode body includes a separator configured such that a heat resistant layer (HRL) is formed at least on one surface thereof, and the electrode body is configured such that the positive electrode sheet and the negative electrode sheet are superimposed on each other with the separator sandwiched between the positive electrode sheet and the negative electrode sheet.

Fourth Item: The separation method for an electrode body according to cany one of the first to third items, in which each of the positive electrode sheet and the negative electrode sheet has an approximately rectangular shape when viewed from a direction in which the positive electrode sheet and the negative electrode sheet are superimposed on each other, and in the ultrasonic wave applying step, the ultrasonic wave is applied to the electrode body in the direction in which the positive electrode sheet and the negative electrode sheet are superimposed on each other.

## Claims

1. A separation method for an electrode body, the separation method comprising:
a preparing step (S1) of preparing an electrode body (20);
an immersing step (S2) of immersing the electrode body (20) in a solution (SL) containing hydrofluoric acid; and
an ultrasonic wave applying step (S3) of applying an ultrasonic wave to the solution (SL),
wherein
the electrode body (20) that is prepared in the preparing step (S1) includes
a positive electrode sheet (22) including a positive electrode active material layer (22b) provided on a positive electrode collecting foil (22a), and
a negative electrode sheet (24) including a negative electrode active material layer (24b) provided on a negative electrode current collecting foil (24a),
the positive electrode sheet (22) and the negative electrode sheet (24) are superimposed on each other so as to be opposed to each other in a state where the positive electrode active material layer (22b) and the negative electrode active material layer (24b) are insulated from each other,
the positive electrode sheet (22) includes a positive electrode tab (23) that is a portion of the positive electrode collecting foil (22a) that protrudes from an area in which the positive electrode active material layer (22b) and the negative electrode active material layer (24b) are superimposed on each other,
the negative electrode sheet (24) includes a negative electrode tab (25) that is a portion of the negative electrode collecting foil (24a) that protrudes from the area in which the negative electrode active material layer (24b) and the negative electrode active material layer (24b) are superimposed on each other, and
in the ultrasonic wave applying step (S3), the ultrasonic wave is applied to the solution (SL) containing the hydrofluoric acid in a state where each of the positive electrode tab (23) and the negative electrode tab (25) of the electrode body (20) is gripped.

2. The separation method for an electrode body according to claim 1, wherein
the electrode body (20) that is prepared in the preparing step (S1) is impregnated with an electrolytic solution (15) containing LiPF₆, and
in the immersing step (S2), the electrode body (20) is immersed in the solution (SL) containing the hydrofluoric acid by immersing the electrode body (20) in water and generating the hydrofluoric acid.

3. The separation method for an electrode body according to claim 1 or 2, wherein
the electrode body (20) includes a separator (26) configured such that a heat resistant layer (HRL) is formed at least on one surface thereof, and
the electrode body (20) is configured such that the positive electrode sheet (22) and the negative electrode sheet (24) are superimposed on each other with the separator (26) sandwiched between the positive electrode sheet (22) and the negative electrode sheet (24).

4. The separation method for an electrode body according to claims 1 to 3, wherein
each of the positive electrode sheet (22) and the negative electrode sheet (24) has an approximately rectangular shape when viewed from a direction in which the positive electrode sheet (22) and the negative electrode sheet (24) are superimposed on each other, and
in the ultrasonic wave applying step (S3), the ultrasonic wave is applied to the electrode body in the direction in which the positive electrode sheet (22) and the negative electrode sheet (24) are superimposed on each other.
